# FASCICULE DE BREVET EUROPEEN

(11) **EP 2 389 288 B1**
(45) Date de publication et mention de la délivrance du brevet: **09.09.2015**
(21) Numéro de dépôt: 10707567.3
(22) Date de dépôt: 21.01.2010
(51) Int. Cl.: B29C 70/72, B29C 70/86, F16C 7/00

(54) **PROCEDE DE FABRICATION D'UNE PIECE COMPOSITE, ET PIECE OBTENUE**
VERFAHREN ZUR HERSTELLUNG EINES VERBUNDTEILS UND VERBUNDTEIL
METHOD FOR MANUFACTURING A COMPOSITE PART, AND RESULTING PART

(30) Priorité: 21.01.2009 FR 0950362; 19.02.2009 FR 0951071
(43) Date de publication de la demande: 30.11.2011
(73) Titulaire: SKF Aerospace France, 26241 Saint Vallier (FR)
(72) Inventeur: VALEMBOIS, Guy, F-31400 Toulouse (FR)
(74) Mandataire: Rhein, Alain
(86) Numéro de dépôt international: PCT/FR2010/050091
(87) Numéro de publication internationale: WO 2010/084286

(56) Documents cités:
- WO-A1-2008/066606
- FR-A5- 2 152 289
- GB-A- 2 260 961
- US-A- 4 848 957

## Description

La présente invention a trait au domaine des pièces réalisées en matériaux composites, et plus particulièrement des pièces destinées à être assemblées à d'autres, et susceptibles d'être soumises à des efforts en traction et/ou en compression.

La présente invention a ainsi pour objet un procédé de réalisation d'une telle pièce réalisée en matériau composite destinée à être soumise, au travers d'au moins un point d'attache, à des efforts en traction et/ou en compression, ainsi que la pièce obtenue.

La présente invention trouve une application particulière dans le domaine de la fabrication des bielles, et a ainsi également pour objet une bielle réalisée selon le procédé selon l'invention.

On sait que le point faible des matériaux composites est la matrice, thermoplastique ou thermodurcissable, dans laquelle sont noyées les fibres de renfort, et qui consiste généralement en une résine, car elle a une résistance spécifique très inférieure à celle des fibres. Le mode de ruine d'une pièce en composite est généralement une rupture de la résine liant les fibres.

Une bonne conception d'une pièce composite prend en compte ce phénomène et privilégie une transmission des efforts par la mise en traction ou en compression pure des fibres ce qui a pour effet de ne pas solliciter la résine. Ainsi, le matériau composite est constitué de couches de fibres orientées dans la direction desdits efforts ou dans des directions proches.

S'il cela est aisément réalisable au niveau de l'essentiel de la pièce lorsque les formes sont simples et la direction des efforts maîtrisée, cela est délicat au niveau des zones de jonction avec une ou plusieurs autres pièces, notamment les zones ou s'exerce la traction ou la compression.

De manière générale une telle zone de jonction comporte un insert muni d'un moyen de raccordement permettant de réaliser la liaison et la transmission des efforts dans la pièce, mais la mise en place de tels inserts est particulièrement délicate, notamment lorsque les efforts changent de sens lors de l'utilisation de ladite pièce composite.

Le principal inconvénient est donc localisé au niveau de la jonction du corps de la pièce composite avec l'insert, et concerne la transmission de l'effort de l'un à l'autre.

C'est le cas par exemple de la bielle décrite dans le document WO 2008/066606, qui comprend un corps tubulaire en matériau composite à chacune des extrémités duquel est solidarisé une pièce métallique comprenant un oeilleton en vue de former un point d'attache. Chacune des pièces métalliques comporte une partie en forme de manchon destinée à être enfilée sur une extrémité du corps tubulaire en cours de fabrication, puis à être recouverte lors de l'achèvement de la fabrication du tube, en sorte que cette partie en forme de manchon soit prise dans l'épaisseur de la paroi tubulaire en matériau composite. Les fibres ne sont utilisées qu'au niveau du corps tubulaire, et éventuellement en enroulement autour de la partie en forme de manchon de la pièce métallique, et ne sont pas orientées dans le sens des sollicitations en compression ou en traction, et c'est la résine qui est sollicitée.

Pour pallier cet inconvénient il a été proposé, notamment dans le document FR 2 125 289, un organe de transmission de forces, de type bielle, réalisé en une matière synthétique renforcée de fibres. Cet organe comprend un corps central tubulaire renfermant des fibres orientées selon le sens dans lequel s'exercent les forces, et dont les extrémités sont rétrécies en forme de tronc de cône pour permettre la solidarisation à chacune d'un moyen de raccordement, laquelle est constituée de deux parties, l'une interne et l'autre externe, en sorte de pouvoir enserrer la partie rétrécie de l'extrémité du corps central tubulaire.

Cependant, cet organe de transmission de forces ne remédie que partiellement aux problèmes de jonction du corps de la pièce composite avec l'insert, et il demeure des problèmes de résistance et de tenue dans le temps.

La présente invention a pour but de proposer un procédé de réalisation d'une pièce en matériau composite destinée à être soumise, au travers d'au moins un point d'attache, à des efforts en traction et/ou en compression, qui permet de remédier aux divers inconvénients précités.

Le procédé de fabrication d'une pièce composite destinée à être soumise, au travers d'au moins un point d'attache, à des efforts en traction et/ou en compression, et constituée de fibres de renfort orientées dans des directions proches de la direction desdits efforts, et noyées dans une matrice, se caractérise en ce que ce qu'il consiste à réaliser les opérations suivantes :
- enrouler des fibres sur un noyau en sorte de constituer une partie de la paroi de ladite pièce, et créer à l'emplacement destiné à constituer le lieu d'application des efforts en traction et/ou en compression, une zone bombée extérieurement convexe, à laquelle la direction desdits effort est radiale,
- mettre en place sur ladite zone bombée convexe, un insert, qui comprend ledit point d'attache ou un moyen de solidarisation dudit point d'attache,
- continuer d'enrouler des fibres en sorte de constituer le reste de ladite paroi, tout en recouvrant une partie dudit insert et tout en laissant accessible ledit point d'attache ou ledit moyen de solidarisation dudit point d'attache.

Selon une caractéristique additionnelle du procédé selon l'invention, l'insert utilisé comporte une partie présentant une face concave destinée à être accolée à la zone bombée, et une face convexe destinée à être recouverte lors de la constitution du reste de la paroi.

On notera que de manière préférentielle, mais non limitative, les courbures des faces concave et convexe de l'insert, sont de rayon constant, en sorte que les plans d'appui sont, selon la géométrie de la pièce à réaliser, de forme hémicylindrique ou hémisphérique, ou en partie cylindrique ou en partie sphérique.

De manière avantageuse, l'insert peut être réalisé dans un matériau composite, éventuellement identique à celui dont est faite la paroi de la pièce.

Selon une caractéristique additionnelle du procédé selon l'invention, l'insert et la paroi de la pièce étant réalisés à base d'une matrice thermoplastique, on réalise au final une fusion dudit insert (2) et de ladite paroi.

Selon une variante du procédé, la mise en place de l'insert est remplacée par la création in situ d'un insert, par bobinage en excès de fibres.

Selon une caractéristique additionnelle du procédé selon l'invention, le bobinage en excès est principalement réalisé dans des directions différentes de celles d'enroulement des fibres pour constituer la paroi.

Selon une caractéristique additionnelle du procédé selon l'invention, le bobinage en excès est réalisé par enroulement coaxial à l'axe selon lequel sont exercés les efforts en traction et/ou en compression.

L'utilisation des matériaux composites permet de réaliser des bielles résistantes et légères. Un tube composite peut avantageusement présenter une résistance en traction, en compression et au flambage pour le peu qu'il soit composé principalement de fibres à hautes caractéristiques mécaniques et dont l'orientation est proche de la direction axiale. Un tel positionnement des fibres peut se faire sur un mandrin par enroulement filamentaire de la fibre composite.

Cependant la faiblesse d'une telle bielle réside dans l'assemblage du tube ainsi constitué avec les moyens de raccordement disposés aux extrémités de la bielle. La liaison entre le tube et ces pièces d'extrémité fait apparaître des modes de sollicitation mal supportés par le matériau composite, particulièrement s'il est formé de fibres unidirectionnelles.

La présente invention remédie à cet inconvénient, et permet de concevoir des bielles en matériaux composites, qu'elle soit tubulaire ou non, et qui comporte deux points d'attache reliés par un corps en matériau composite.

Les avantages et les caractéristiques du procédé selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique partielle en coupe d'une pièce composite obtenue par le procédé selon l'invention.
- les figures 2a et 2b représentent des vues schématiques partielles en coupe de variantes de la même pièce composite.
- les figures 3a, 3b et 3c représentent des vues schématiques partielles en coupe illustrant des variantes de mise en oeuvre du procédé selon l'invention.

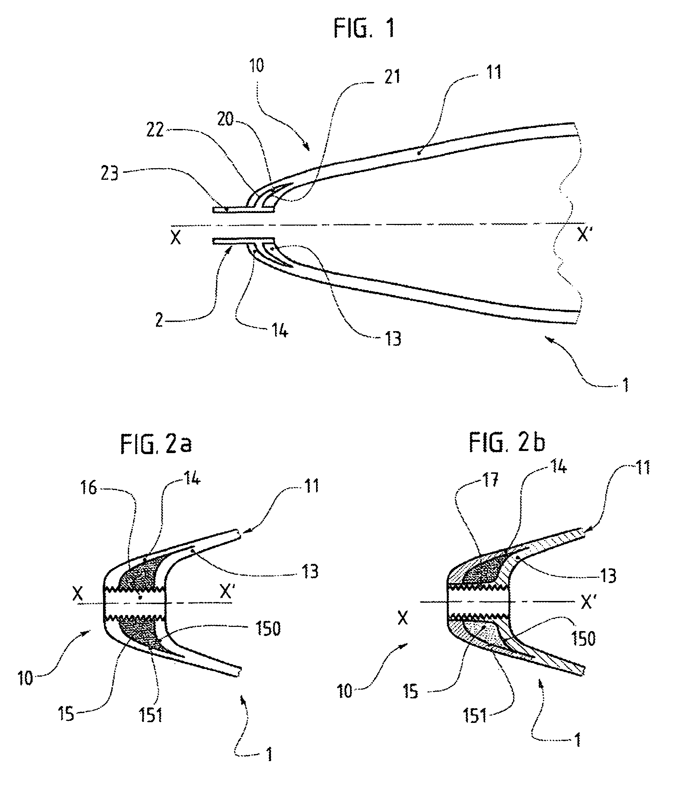

En référence maintenant à la figure 1, on peut voir l'extrémité 10 d'une pièce 1 en matériau composite, réalisée selon le procédé objet de l'invention. Cette extrémité est destinée à être équipée d'un point d'attache en vue de pouvoir soumettre la pièce 1 à des efforts en traction et/ou en compression. La pièce 1 consiste en l'occurrence, mais non limitativement, en une bielle.

La pièce 1 comprend une paroi tubulaire 11 constituée de fibres et de résine, et son extrémité 10 comporte un insert 2, noyé dans l'épaisseur de la paroi 11.

L'insert 2 comporte d'une part une partie 20 en forme de coupelle comprenant une face interne concave 21, une face externe convexe 22, et d'autre part un fût axial 23 destiné à permettre l'assujettissement de moyens de fixation.

Au niveau de l'extrémité 10 de la pièce 1, la paroi tubulaire 11, est divisée en deux couches, une couche interne 13 et une couche externe 14, entre lesquelles est inséré l'insert 2.

La couche interne 13 épouse la forme de la face interne concave 21, et les fibres qui la traversent sont parallèles à cette dernière.

De même, la couche externe 14 épouse la forme de la face externe convexe 22, et les fibres qui la traversent sont parallèles à cette dernière.

En traction l'effort est réalisé entre la couche externe 14 et la face externe convexe 22, tandis et la face interne concave 21.

La pièce 1 est obtenue au travers du procédé de fabrication selon l'invention, à savoir que des fibres sont enroulées pour former la paroi tubulaire 11 et l'extrémité 10, en utilisant un noyau par exemple, jusque, dans un premier, à la réalisation de la couche interne 13. Puis l'insert 2 est mis en place, la face interne concave 21 de sa partie 20 étant accolée à la couche interne 13 qui est de forme bombée au niveau de l'extrémité 10, puis l'enroulement de fibres est poursuivi pour réaliser le reste de la paroi tubulaire 11 et la couche externe 14, en recouvrant la face externe convexe 22 de la partie 20 de l'insert 2, tout en laissant accessible le fût axial 23, afin de pouvoir assujettir un moyen de fixation, non représenté.

L'insert 2 peut être réalisé en métal, ou bien en matériau composite, éventuellement identique à celui dont est faite la paroi tubulaire 11. Dans le cas d'une matrice thermoplastique, il est possible d'obtenir au final une fusion de l'insert 2 et de la paroi 11.

En référence maintenant aux figures 2a et 2b, on peut voir des variantes de l'invention, dans lesquelles l'insert est créé lors de la fabrication de la pièce.

Sur ces figures on retrouve la paroi tubulaire 11 et ses couches interne 13 et externe 14, qui présentent chacune une forme bombée, tandis que l'insert est remplacé par un surplus 15 de matière disposé entre ces couches interne 13 et externe 14.

Le moyen d'assujettissement de moyens de fixation est remplie par un trou taraudé 16, obtenu par la mise en place préalable et temporaire d'une tige filetée, non représentée, et réalisé essentiellement dans le surplus 15 de matière comme représenté sur le figure 2a, ou uniquement dans la couche interne 13 comme représenté sur la figure 2b.

En ce qui concerne le mode de réalisation de la figure 2b, au cours de la réalisation de la couche interne 13, on procède à un enroulement de fibres autour de la tige filetée du noyau, non représenté, en sorte de créer simultanément à la couche interne 13, un fût taraudé 17, autour duquel sera créé le surplus 15 de matière.

Le surplus 15 peut consister en un bobinage en excès de fibres, après réalisation de la couche interne 13, par un enroulement dans des directions différentes de celles dans lesquelles sont enroulées les fibres pour constituer la paroi tubulaire 11, coaxialement à l'axe XX' de la pièce 11 par exemple.

Le surplus 15 coopère avec les fibres de la paroi 11, de la même manière que l'insert 2, il comporte également une face interne concave 150 et une face externe convexe 151.

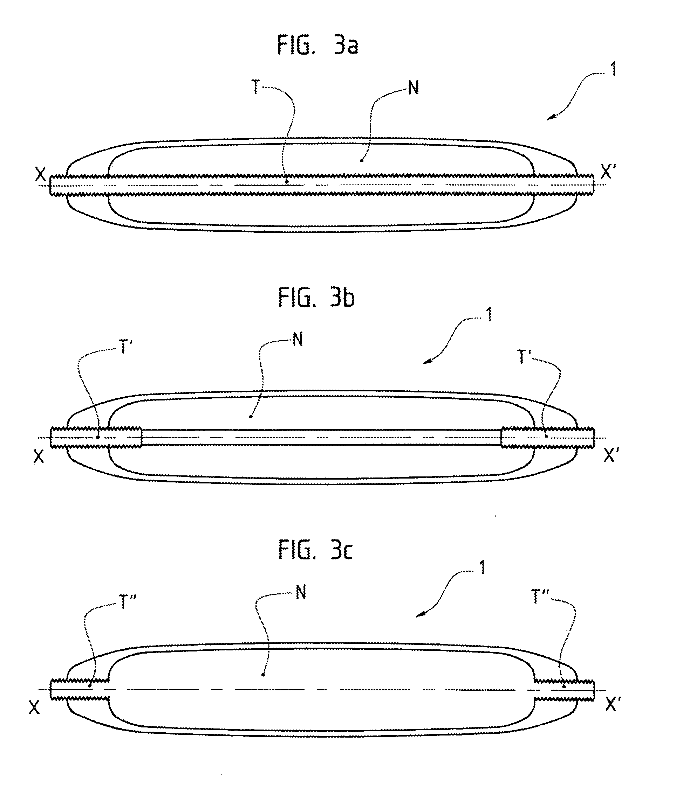

En référence aux figures 3a, 3b et 3c, on peut voir des exemples de noyaux susceptibles d'être utilisés pour la fabrication d'une pièce 1.

Sur la figure 3a on utilise un noyau fusible N traversé axialement par une tige filetée T, sur la figure 3b, on utilise un noyau fusible N muni à chacune de ses extrémités d'une tige filetée T', tandis que sur la figure 3c, on utilise un noyau N qui comporte de fabrication, à chacune de ses extrémités, une excroissance T" en forme de tige filetée.

On notera que le noyau N peut être réalisé en cire ou préférentiellement en métal à bas point de fusion, tandis que les tiges filetées T et T' sont de préférence polies et cirées.

Bien entendu, dans les différents procédés évoqués ci-dessus, lorsqu'il est question d'enroulement de fibres il convient de comprendre que celles-ci sont noyées dans une matrice thermoplastique ou thermodurcissable, en étant éventuellement pré-imprégnées.

On notera que selon le procédé, il est possible de réaliser une polymérisation entre chaque opération d'enroulement, ou bien une seule polymérisation après la dernière opération d'enroulement, cela étant aussi fonction de la nature de la matrice utilisée.

## Revendications

1. Procédé de fabrication d'une pièce composite (1) destinée à être soumise, au travers d'au moins un point d'attache, à des efforts en traction et/ou en compression, et constituée de fibres de renfort orientées dans des directions proches de la direction desdits efforts , et noyées dans une matrice, **caractérisé en ce qu'**il consiste à réaliser les opérations suivantes :
- enrouler des fibres sur un noyau (N) en sorte de constituer une partie (13) de la paroi (11) de ladite pièce (1), et créer à l'emplacement destiné à constituer le lieu d'application des efforts en traction et/ou en compression, une zone bombée extérieurement convexe, à laquelle la direction desdits effort est radiale,
- mettre en place sur ladite zone bombée convexe, un insert (2; 15) qui comprend ledit point d'attache ou un moyen (23; 16; 17) de solidarisation dudit point d'attache,
- continuer d'enrouler des fibres en sorte de constituer le reste (14) de ladite paroi (11), tout en recouvrant une partie dudit insert (2; 15) et tout en laissant accessible ledit point d'attache ou ledit moyen (23; 16; 17) de solidarisation dudit point d'attache.

2. Procédé selon la revendication 1, **caractérisé en ce que** l'insert (2) utilisé comporte une partie (20) présentant une face concave (21) destinée à être accolée à la zone bombée, et une face convexe (22) destinée à être recouverte lors de la constitution du reste (14) de la paroi (11).

3. Procédé selon la revendication 2, **caractérisé en ce que** les courbures des faces concave (21) et convexe (22) de l'insert (2), sont de rayon constant, en sorte que les plans d'appui sont, selon la géométrie de la pièce (1) à réaliser, de forme hémicylindrique ou hémisphérique, ou en partie cylindrique ou en partie sphérique.

4. Procédé selon l'une quelconque des revendications précédentes, **caractérisé en ce que** l'insert (2) est réalisé dans un matériau composite, éventuellement identique à celui dont est faite la paroi (11) de la pièce (1).

5. Procédé selon la revendication 4, **caractérisé en ce que** l'insert (2) et la paroi (11) de la pièce (1) étant réalisés à base d'une matrice thermoplastique, on réalise au final une fusion dudit insert (2) et de ladite paroi (11).

6. Procédé selon l'une quelconque des revendications 1 à 4, **caractérisé en ce que** la mise en place de l'insert est remplacée par la création in situ d'un insert (15), par bobinage en excès de fibres.

7. Procédé selon la revendication 6, **caractérisé en ce que** le bobinage en excès (15) est principalement réalisé dans des directions différentes de celles d'enroulement des fibres pour constituer la paroi.

8. Procédé selon la revendication 7, **caractérisé en ce que** le bobinage en excès (15) est réalisé par enroulement coaxial à l'axe (xx') selon lequel sont exercés les efforts en traction et/ou en compression.

9. Pièce composite (1) destinée à être soumise, au travers d'au moins un point d'attache, à des efforts en traction et/ou en compression, et constituée de fibres de renfort orientées dans la direction desdits efforts ou dans des directions proches, et noyées dans une matrice, **caractérisée en ce qu'**elle est obtenue par le procédé selon l'une quelconque des revendications précédentes.

10. Bielle en matériau composite (1), comportant deux points d'attache reliés par un corps en matériau composite, **caractérisée en ce qu'**elle obtenue par le procédé selon Dispositif selon l'une quelconque des revendications 1 à 8.

## Patentansprüche

1. Verfahren zur Herstellung eines Verbundteils (1), das dazu bestimmt ist, über mindestens einen Befestigungspunkt Zug-/oder Kompressionkräften ausgesetzt zu werden, und das aus Verstärkungsfasern besteht, die in Richtungen nahe der Richtung der Kräfte orientiert und in einer Matrix eingebettet sind, **dadurch gekennzeichnet, dass** es folgende Operationen umfaßt:
- die Fasern auf einen Kern (N) zu wickeln, so daß ein Teil (13) der Wand (11) des besagten Teils (1) gebildet wird, und an der Stelle, die dazu bestimmt ist, die Stelle des Anbringens der Aufbringung der Zug-/ oder Kompressionkräfte zu bilden, einen nach außen konvex gebogenen Bereich zu schaffen, zu dem die Richtung der besagten Kräfte radial ist,
- auf dem konvex gebogenen Bereich einen Einsatz (2; 15) zu platzieren, der den Befestigungspunkt oder ein Mittel (23; 16; 17) zur festen Verbindung des besagten Befestigungspunkts umfasst,
- das Wickeln der Fasern fortzusetzen, so dass der Rest (14) der besagten Wand (11) gebildet wird, während ein Teil des besagten Einsatzes (2; 15) abgedeckt wird und während der besagte Befestigungspunkt oder das besagte Mittel (23; 16; 17) zur festen Verbindung des besagten Befestigungspunktes zugänglich gehalten bleibt.

2. Verfahren nach Anspruch 1, **dadurch gekennzeichnet, dass** der verwendete Einsatz (2) einen Teil (20) umfasst, der eine konkave Fläche (21), die dazu bestimmt ist, an dem gekrümmten Bereich angesetzt zu werden, und eine konvexe Fläche (22), die dazu bestimmt ist, während der Bildung des Restes (14) der Wand (11) abgedeckt zu werden, umfasst.

3. Verfahren nach Anspruch 2, **dadurch gekennzeichnet, dass** die Krümmungen der konkaven (21) und konvexen (22) Flächen des Einsatzes (2) einen konstanten Radius haben, so dass die Stützebenen je nach der Geometrie des hergzutellenden Teils (1) halbzylinderförmig oder halbkugelförmig oder teilweise zylinderförmig oder teilweise kugelförmig sind.

4. Verfahren nach irgendeinem der vorhergehenden Ansprüche, **dadurch gekennzeichnet**, dss der Einsatz (2) aus einem Verbundmaterial besteht, das eventuell demjenigen identisch ist, aus dem die Wand (11) des Teils (1) hergestellt ist.

5. Verfahren nach Anspruch 4, **dadurch gekennzeichnet, dass** da der Einsatz (2) und die Wand (11) des Teils (1) auf der Basis einer thermoplastischen Matrix hergestellt sind, schließlich eine Kombination des besagten Einsatzes (2) und der besagten Wand (11) durchgeführt wird.

6. Verfahren nach irgendeinem der Ansprüche 1 bis 4, **dadurch gekennzeichnet, dass** das Plazieren des Einsatzes durch die Herstellung in situ eines Einsatzes (15) durch Wickeln in Übermass zu den Fasern ersetzt wird.

7. Verfahren nach Anspruch 6, **dadurch gekennzeichnet, dass** das Wickeln in Übermass (15) hauptsächlich in Richtungen erfolgt, die von denen des Wickelns der Fasern zum Bilden der Wand unterschiedlich sind.

8. Verfahren nach Anspruch 7, **dadurch gekennzeichnet, dass** das Wickeln in Übermass (15) durch Wickeln koaxial zur Achse (XX'), entlang der die Zug- und/oder Kompressionskräfte ausgeübt werden, erfolgt.

9. Verbundteil (1), das dazu bestimmt ist, über mindestens einen Befestigungspunkt Zug-/oder Kompressionkräften ausgesetzt zu werden, und das aus Verstärkungsfasern besteht, die in der Richtung der besagten Kräfte oder in dazu nahen Richtungen orientiert und in einer Matrix eingebettet sind, **dadurch gekennzeichnet, dass** es mittels des Verfahrens nach irgendeinem der vorhergehenden Ansprüche erhalten wird.

10. Pleuelstange aus Verbundmaterial (1), umfassend zwei durch einen Körper aus Verbundmaterial verbunde Befestigungspunkten, **dadurch gekennzeichnet, dass** sie mittels des Verfahrens nach irgendeinem der Ansprüche 1 bis 8 erhalten wird.

## Claims

1. A method for manufacturing a composite part (1) aimed at being subjected, through at least one attachment point, to traction and/or compression forces, and formed of reinforcing fibers oriented in directions close to the direction of said forces, and embedded in a matrix, wherein it comprises the following operations:
- winding fibers on a core (N) so as to form a portion (13) of the wall (11) of said part (1), and create the location aimed at being the place of application of the traction and/or compression forces, an externally convex curved area, which the direction of said force is radial to,
- placing on said convex curved region an insert (2; 15), which comprises said attachment point or a means (23; 16; 17) for making said attachment point integral,
- continuing to wind the fibers so as to form the rest (14) of said wall (11), while covering a portion of said insert (2; 15) and while leaving accessible said attachment point or said means (23; 16; 17) for making said attachment point integral.

2. The method according to claim 1, wherein the insert (2) being used includes a portion (20) having a concave surface (21) aimed at being contiguous to the curved region, and a convex surface (22) aimed at being covered during the forming of the rest (14) of the wall (11).

3. The method according to claim 2, wherein the curvatures of the concave (21) and convex (22) surfaces of the insert (2) are of a constant radius, so that the bearing planes have, depending on the geometry of the part (1) to be made, a semi-cylindrical or hemispherical shape, or are partially cylindrical or partially spherical.

4. The method according to any one of the preceding claims, wherein the insert (2) is made of a composite material, eventually identical to that, which the wall (11) of the part (1) is made of.

5. The method according to claim 4, wherein, since the insert (2) and the wall (11) of the part (1) are made based on a thermoplastic matrix, a combination of said insert (2) and said wall (11) is finally made.

6. The method according to any one of claims 1 to 4, wherein the placing of the insert is replaced by the creation in situ of an insert (15) by winding in excess of the fibers.

7. The method according to claim 6, wherein the winding in excess (15) is mainly carried out in directions different from those of winding of the fibers to form the wall.

8. The method according to claim 7, wherein the winding in excess (15) is made by winding coaxially to the axis (XX') along which the traction and/or compression forces are exerted.

9. A composite part (1) aimed at being subjected, through at least one attachment point, to traction and/or compression forces, and formed of reinforcing fibers oriented in the direction of said forces or in directions close thereto, and embedded in a matrix, wherein it is obtained by the method according to any of the preceding claims.

10. Connecting rod made of composite material (1), comprising two attachment points connected by a body made of composite material, wherein it is obtained by the method according to any one of claims 1 to 8.
